# EUROPÄISCHE PATENTSCHRIFT

(11) **EP 2 885 086 B1**
(45) Veröffentlichungstag und Bekanntmachung des Hinweises auf die Patenterteilung: **10.08.2016**
(21) Anmeldenummer: 13753090.3
(22) Anmeldetag: 13.08.2013
(51) Int. Cl.: B05C 5/02, B05D 1/26, B05D 7/20, B29C 47/00, B29C 47/54, B29C 47/56, C03C 25/18, C03C 25/12, B05C 9/10, B29C 47/02, D07B 7/14

(54) **WERKZEUG SOWIE VERFAHREN ZUR UMMANTELUNG EINES ALS METERWARE VORLIEGENDEN LANGGUTES**
TOOL AND METHOD FOR SHEATHING AN ELONGATE PRODUCT AVAILABLE BY THE METER
OUTIL ET PROCÉDÉ DE REVÊTEMENT D'UN PRODUIT LONG SE PRÉSENTANT SOUS LA FORME D'UNE MARCHANDISE AU MÈTRE

(30) Priorität: 16.08.2012 DE 102012016248
(43) Veröffentlichungstag der Anmeldung: 24.06.2015
(73) Patentinhaber: Fraunhofer-Gesellschaft zur Förderung der angewandten Forschung e.V., 80686 München (DE)
(72) Erfinder: FISCHER, Andreas, 78176 Blumberg (DE); ROMMEL, Steve, 71287 Weissach (DE); GEIGER, Raphael, 70197 Stuttgart (DE); WEBER, Stefan, 74354 Besigheim (DE)
(74) Vertreter: Rösler, Uwe
(86) Internationale Anmeldenummer: PCT/EP2013/002433
(87) Internationale Veröffentlichungsnummer: WO 2014/026762

(56) Entgegenhaltungen:
- WO-A1-2012/088692
- DE-A1- 3 709 009
- US-A- 3 019 484
- US-A- 5 749 971

## Beschreibung

### Technisches Gebiet

Die Erfindung bezieht sich auf ein Werkzeug sowie auf ein Verfahren zur Ummantelung eines als Meterware vorliegenden Langgutes, insbesondere in Form einer Faser oder eines Faserbündels, mit wenigstens einer Thermoplastschicht, mit einer Benetzungseinheit, die wenigstens eine mit einem fließfähigen Thermoplast befüllbare Kontaktzone umfasst, durch die das Langgut zu Zwecken einer Benetzung mit dem Thermoplast in Form eines kontinuierlich fortlaufenden Stranges führbar ist.

### Stand der Technik

Aus der DE-OS-27 33 075 ist ein gattungsgemäßes Verfahren zum Überziehen eines Langgutes in Form eines drahtförmigen Gegenstandes mit einem thermisch schmelzbaren Material zu entnehmen, das innerhalb eines Gehäuse als erhitztes Flüssigbad vorliegt. Das Gehäuse sieht einen Gehäuseabschnitt mit zwei vertikal übereinander angeordneten Gehäuseöffnungen vor, durch die der als Meterware vorliegende, drahtförmige Gegenstand uniaxial vertikal von unten nach oben durch das Gehäuse hindurch geführt wird, wodurch der drahtförmige Gegenstand mit dem in geschmolzener Form vorliegenden Material äußerlich benetzt wird. Der vertikal nach oben geführte und mit geschmolzenem Material ummantelte, drahtförmige Gegenstand wird unmittelbar nach Austritt aus dem Flüssigkeitsbad gekühlt, wodurch sich Mantelmaterial verfestigt. Der drahtförmige Gegenstand wird über motorisch angetriebene Rollen unter Vorgabe einer bestimmten Fördergeschwindigkeit durch das mit geschmolzenem Material angefüllte Gehäuse gezogen.

Aus der DE 42 26 343 A1 ist ein Verfahren zur Herstellung einer optischen Faser zu entnehmen, bei dem die aus einer Glasvorform gezogene optische Faser in unmittelbarer Prozessabfolge durch eine Beschichtungsvorrichtung geführt wird, in der Beschichtungsmaterial in flüssiger Form bevorratet ist, das sich an der Oberfläche der optischen Faser in Form einer Materialschicht absetzt. Die aus unmittelbar aus der Beschichtungsvorrichtung austretende, beschichtete optische Faser wird zu Zwecken eine schnellen Aushärtung oder Vernetzung des Schichtüberzuges in einer Schutzgasatmosphäre geführt.

Die Druckschrift DE 41 21 677 A1 beschreibt ein Verfahren zum Beschichten einer optischen Faser in einem Druckbeschichtungsgefäß, das eine mit Druck beaufschlagte Vorratsmenge an Lack enthält. Das Druckbeschichtungsgefäß weist zwei an sich gegenüberliegenden Gefäßwänden angebrachte Öffnungen für die Durchführung einer optischen Faser auf, die gegenüber Leckagen abgedichtet sind. Die Druckregelung innerhalb des Druckbeschichtungsgefäßes erfolgt derart, dass im Zusammenhang mit der Ziehgeschwindigkeit, mit der die optische Faser durch das Beschichtungsgefäß gezogen wird, eine möglichst gleichmäßige Schichtdickenabscheidung erhalten wird.

Die US-Schrift US 5,749,971 offenbart eine Vorrichtung zum Beschichtung von Schweißelektroden mit einem Flussmittel, bei der die Schweißelektrode mittels einer Führungseinheit durch eine düsenförmig ausgebildete Beschichtungseinheit gefördert wird, in der die Schweißelektrode mit dem verflüssigten Flussmittel ummantelt wird, das über seitliche Zuführungen der Beschichtungseinheit zugeleitet wird.

Die Druckschrift DE 10 2010 045 279 A1 beschreibt eine Vorrichtung zur Herstellung von mit Polymeren beschichteten Formkörpern, insbesondere zur Beschichtung von Fasern und Filamenten. Mittels Transportrollen wird eine zu beschichtende Faser durch ein Führungsrohr in ein Bad mit flüssigem Polymer gezogen und anschließend durch eine Blendenöffnung geführt, an der überschüssiges Polymer abgestreift wird. Schließlich gelangt die mit Polymer beschichtete Faser über weitere Transportrollen unter mechanischer Spannung zur Ausrichtung der Polymere längs einer sogenannten Entspannungsstrecke.

Aus WO 2012/088692 A1 ist ein Werkzeug zur Ummantelung eines Langguts bekannt, bei dem das Langgut während der Ummantellung kontinuierlich, z.B. mittels eines Andruckrollenpaars oder einer Wickeltrommel, durch das Werkzeug gezogen wird.

In DE 37 09 009 A1 ist ein Querspritzkopf für die Ummantelung von Drähten bzw. Lichtleitfasern offenbart, dem die Schmelze von einem zur Durchlaufrichtung des Leiters bzw. Kabels senkrecht stehenden Extruder zugeführt wird. Der Querspritzkopf weist bewegliche Umlenk- und Verteilvorrichtungen auf, mit denen die Schmelze über den Umfang auf- und verteilt wird.

Allen bekannten Beschichtungsvorrichtungen und -verfahren für als Meterware vorliegende Langgüter ist gemeinsam, dass die Vorrichtungen zumeist großbauend und schwer ausgebildet sind und daher nicht dafür geeignet erscheinen, diese als portable Werkzeuge einzusetzen. Beispielsweise wäre es wünschenswert derartige Werkzeuge mit beweglich geführten Roboterarmen zu kombinieren, um das frisch ummantelte Langgut, dessen Mantelmaterial noch nicht verfestigt oder ausgehärtet ist, zu Zwecken einer individuellen räumlichen Verlegung zum Aufbau dreidimensionaler Strukturen einzusetzen. In allen bekannten Fällen sind zudem aufwendige Förder- und Transportmechanismen notwendig, mit denen das zu beschichtende Langgut durch eine geeignet konzipierte Beschichtungsvorrichtung hindurch gefördert werden muss.

### Darstellung der Erfindung

Der Erfindung liegt die Aufgabe zugrunde, ein Werkzeug sowie ein Verfahren zur Ummantelung eines als Meterware vorliegenden Langgutes, insbesondere in Form einer Faser oder eines Faserbündels, mit wenigstens einer Thermoplastschicht, mit einer Benetzungseinheit, die wenigstens eine mit einem fließfähigen Thermoplast befüllbare Kontaktzone umfasst, durch die das Langgut zu Zwecken einer Benetzung mit dem Thermoplast in Form eines kontinuierlich fortlaufenden Stranges führbar ist, derart weiterzubilden, dass der Ummantelungsprozess des Langgutes mit wenigstens einer Schicht aus thermoplastischem Material mit einer gegenüber dem Stand der Technik reduzierten Anzahl an hierfür erforderlichen Komponenten realisierbar ist, so dass das zur Ummantelung dienende Werkzeug möglichst kompakt und kleinbauend ausgebildet sein soll. Insbesondere gilt es die Möglichkeit zu eröffnen, das mit thermoplastischem Material ummantelte Langgut unmittelbar nach Austritt aus dem Werkzeug in Form eines fortlaufenden Stranges längs eines dreidimensional vorgebbaren Verlegeweges aus dem Werkzeug auszutragen. Die für die Realisierung des neuartigen Werkzeuges erforderlichen Mittel und Komponenten sollten möglichst kostengünstig sein und eine verfahrenstechnisch einfache Handhabung ermöglichen.

Die der Erfindung zugrunde liegende Aufgabe wird durch ein im Anspruch 1 angegebenes Werkzeug gelöst. Gegenstand des Anspruches 17 ist ein lösungsgemäßes Verfahren zur Ummantelung eines als Meterware vorliegenden Langgutes. Den Erfindungsgedanken in vorteilhafter Weise weiterbildende Merkmale sind Gegenstand der Unteransprüche sowie der weiteren Beschreibung, insbesondere unter Bezugnahme auf die Ausführungsbeispiele zu entnehmen.

Das lösungsgemäße Werkzeugkonzept baut auf dem grundlegenden Prinzip einer Stoffaustragsdüse auf, bei der wenigstens ein pastös fließfähiges Material, beispielsweise in Form eines erweichten fließfähigen Thermoplast druck- bzw. kraftbeaufschlagt durch einen Düsenkörper gefördert wird unter Ausbildung eines kontinuierlichen Materialstranges, dessen unmittelbar nach Austritt aus dem Düsenkörper pastöse Konsistenz in Abhängigkeit des gewählten Materials zumeist durch Abkühlen und/oder durch Lichtinduzierte Vernetzungsprozesse einer Materialaushärtung unterliegt. Den kraft- oder druckbeaufschlagten Förderprozess, mit dem ein durch Erwärmen fließfähiges Thermoplast durch einen Düsenkörper, der im Weiteren als Benetzungseinheit bezeichnet wird, gefördert wird, macht sich das lösungsgemäße Werkzeug zur Ummantelung eines als Meterware vorliegenden Langgutes zunutze, indem das als lose Meterware vorliegende Langgut über einen entsprechend in der Benetzungseinheit vorgesehenen Zugang in den Förderbereich des die Benetzungseinheit druck- bzw. kraftbeaufschlagt durchsetzenden thermisch erweichten und daher fließfähigen thermoplastischen Materialstroms eingebracht wird, so dass das Langgut möglichst längs seines Umfangsrandes allumfassend vom Thermoplast umschlossen wird. Aufgrund der zwischen der Langgutoberfläche und dem durch die Benetzungseinheit fließenden Thermoplast wirkenden adhäsionsbedingten Reibungskräfte, durch die das Langgut in Strömungsrichtung des fließfähigen Thermoplast regelrecht mitgezogen wird. Aufgrund der reibschlussbedingten, sich längs des Langgutes in Richtung der Fließ- bzw. Förderrichtung des fließfähigen Thermoplast ausbildenden Zugkraft, bedarf es keiner weiteren, die Zu- oder Abförderung des Langgutes in oder durch die Benetzungseinheit unterstützenden, motorisch angetriebenen Fördereinrichtung. Durch den lösungsgemäßen Wegfall jeglicher motorisch angetriebener Zufördermechanismen für das Langgut ist die Voraussetzung geschaffen, die Benetzungseinheit möglichst klein, kompakt und leichtgewichtig auszuführen, so dass ihr Einsatz selbst in Form einer portablen Einheit am Manipulator-Endarm einer Robotereinheit möglich wird. Da das das Langgut ummantelnde thermoplastische Material unmittelbar nach dem Austrag aus dem Werkzeug in einem pastösen Zustand ist, eignet sich der aus dem Werkzeug austretende Materialstrang in bevorzugterweise für die Herstellung zwei- und insbesondere dreidimensionaler Bauteile, die durch unmittelbar aufeinander folgendes Ablegen des mit dem Thermoplast ummantelten Langgutes erzeugbar sind. Besonders geeignet sind hiefür mit Thermoplast ummantelte Fasern, bspw. Endlosfasern, Faserbündel, Stapelfasergarne etc.

Lösungsgemäß zeichnet sich das Werkzeug zur Ummantelung eines als Meterware vorliegenden Langgutes, insbesondere in Form einer Faser oder eines Faserbündels, mit wenigstens einer Thermoplastschicht, mit einer Benetzungseinheit, die wenigstens eine mit einem fließfähigen Thermoplast befüllbare Kontaktzone umfasst, durch die das Langgut zu Zwecken einer Benetzung mit dem Thermoplast in Form eines kontinuierlich fortlaufenden Stranges führbar ist, dadurch aus, dass in die wenigstens eine Kontaktzone wenigstens ein erster Zuführbereich für das Langgut sowie wenigstens ein zweiter Zuführbereich für das Thermoplast münden, wobei die Kontaktzone wenigstens einen Austrittsbereich aufweist, durch den das mit dem Thermoplast ummantelte Langgut aus der Benetzungseinheit austritt. Längs des wenigstens zweiten Zuführbereiches ist ferner ein Mittel angebracht, durch das das Thermoplast druckbeaufschlagt in die Kontaktzone in Richtung des Austrittsbereiches einbringbar ist, in der das Thermoplast das in die Kontaktzone geführte Langgut ausschließlich durch Reibkraft zwischen dem Thermoplast und dem Langgut längs durch den Austrittsbereich mitführt.

Hinsichtlich der Bereitstellung und Zuführung des als Meterware vorliegenden Langgutes, vorzugsweise in Form einer Endlosfaser, sind keinerlei motorisch unterstützende Maßnahmen erforderlich, vielmehr gilt es, das Langgut in loser Form, d.h. kraftfrei dem ersten Zuführbereich zuzuführen.

Aus Gründen einer einfachen Handhabung und Zuführung des thermoplastischen Materials durch den ersten Zuführbereich der Benetzungseinheit wird das Thermoplast in Form eines festen Strangs bereitgestellt, der kraftbeaufschlagt durch den zweiten Zuführbereich in Richtung der Kontaktzone mit Hilfe eines geeignet ausgebildeten Fördermittels geführt wird. Besonders geeignete Fördermittel stellen motorisch angetriebene Förderwalzen oder - räder dar, die längs des zweiten Zuführbereiches vorzugsweise paarweise mit jeweils entgegengesetztem Drehsinn rotierend angebracht sind und den zu fördernden Thermoplaststrang beidseitig reibschlüssig lokal berühren und Richtung Kontaktzone fördern. Zu Zwecken der Aufschmelzung des in fester Form vorliegenden Thermoplaststranges ist im Bereich der Kontaktzone und/oder längs des zweiten Zuführbereiches eine Heizanordnung vorgesehen, durch die das feste Thermoplastmaterial erwärmt und in den fließfähigen Zustand überführt wird, so dass das fließfähige Thermoplast letztlich zumindest einen Teilbereich der Kontaktzone druckbeaufschlagt befüllt. Um zu verhindern, dass fließfähiges Thermoplast entgegen der Förderrichtung durch den zweiten Zuführbereich mit rückwärts gerichteter Fließrichtung entweicht, umschließt der zweite Zuführbereich den festen Thermoplaststrang längs dessen Umfangsrichtung in Bezug auf das erweichte fließfähige Thermoplast fluiddicht. Das fließfähige Thermoplast gelangt durch eine geeignete Formgebung des ersten Zuführbereiches sowie der Kontaktzone mit einer vorgegebenen, in Richtung des Austrittsbereiches orientierten Fließrichtung in die Kontaktzone. Das über den ersten Zuführbereich in die Kontaktzone zugeführte Langgut wird ausschließlich durch die Strömungsdynamik des die Kontaktzone durchströmenden fließfähigen Thermoplastes erfasst und mit diesem gemeinsam in Richtung des Austrittsbereiches mitgeführt. Hierbei erfolgt nicht nur eine allumfassende Benetzung des Langgutes mit dem fließfähigen Thermoplast, vielmehr vermag das fließfähige Thermoplast das Langgut je nach Material und Konsistenz des Langgutes zumindest teilweise zu durchdringen. Handelt es sich bei dem in die Kontaktzone zugeführten Langgutes beispielsweise um aus Einzelfasern zusammengesetzte Faserbündel oder aus einzelnen Faserfilamenten bestehende Fasern, wie beispielsweise Kohle- oder Kunststofffaserstränge, so erfolgt innerhalb der Kontaktzone eine regelrechte vollständige Durchtränkung des zugeführten Langgutes mit dem fließfähigen Thermoplast.

Die Benetzungseinheit, die in Form eines Düsenkörpers ausgestaltet ist und über wenigstens zwei vorstehend erläuterte Zuführbereiche, eine Kontaktzone sowie einen Austrittsbereich verfügt, ist vorzugsweise mit Hilfe generativer Herstelltechniken zu fertigen, so dass die lösungsgemäße Benetzungseinheit bedarfsgerecht skalierbar und aus hitze- und druckresistentem Material, vorzugsweise aus Metall, gefertigt werden kann.

Mit Hilfe des lösungsgemäß ausgebildeten Werkzeuges sind Faserverbundwerkstoffe automatisiert herstellbar und dies in wirtschaftlich vertretbarer Form bereits ab Losgrößen von eins.

Eine vorteilhafte Ausführungsform sieht längs des ersten Zuführbereiches, durch den das Langgut in die Benetzungseinheit eingeführt wird, eine Trennvorrichtung vor, mit der es möglich ist, die Zuführung des Langgutes durch bloßes Durchtrennen zu unterbrechen, so dass der aus dem Werkzeug austretende pastös fließfähige Thermoplaststrang keine Faser umschließt. Auf diese Weise dient das Werkzeug als Austragsdüse eines ausschließlich aus fließfähigem Thermoplastmaterial bestehenden Materialstranges. Jederzeit ist es jedoch möglich, das lose bevorratete Langgut der Benetzungseinheit erneut zuzuführen. Hierzu verfügt die Benetzungseinheit über eine gesondert ausgebildete Fördereinrichtung für eine kontrollierte Einführung des Langgutes durch den ersten Zuführbereich in die mit dem fließfähigen Thermoplast druckbeaufschlagte Kontaktzone, aus der das Langgut unter Reibschluss mit dem fließfähigen Thermoplast durch den Austrittsbereich der Benetzungseinheit erneut mitgeführt wird.

Mit dem lösungsgemäßen Werkzeug, das robotergeführt, vorzugsweise um wenigstens drei Raumachsen translatorisch sowie auch rotatorisch geführt sein kann, sind faserverstärkte Verbundbauteile im Wege des generativen Herstellverfahrens realisierbar, deren Bauteilfestigkeit durch die Gegenwart des Faserbestandteils innerhalb des Baumaterials signifikant gegenüber konventionell hergestellten Bauteilen, die mittels generativer Schichtaufbautechnik hergestellt worden sind, verbessert ist. Zudem ermöglicht das lösungsgemäße Werkzeug durch die vorstehend erläuterte Trenn- und Fördereinrichtung für das Langgut einen selektiven Verbau des materialverstärkenden Faseranteils vorzugsweise nur an jenen Stellen oder Bereichen innerhalb eines generativ herzustellenden Bauteils, die einer besonders hohen Belastung unterliegen, hingegen können andere Bauteilbereiche, die nur geringen Belastungen unterworfen sind, ausschließlich aus Thermoplast aufgebaut sein. Sowohl für die Unterbrechung der Faserzuführung bei ansonsten kontinuierlichem Thermoplastaustrag, als auch für die Wiederzuführung der Faser sind keine Prozessunterbrechungen erforderlich, d.h. der generative Herstellprozess kann unterbrechungsfrei durchgeführt werden. Hinzukommt, dass durch die Möglichkeit des selektiven Einsatzes des zugeführten Langgutes insbesondere bei großvolumigen Bauteilen die Materialkosten und damit die Herstellkosten erheblich reduziert werden können.

Im Weiteren werden bevorzugte Ausführungsbeispiele zur Realisierung eines lösungsgemäßen Werkzeuges zur Ummantelung eines als Meterware vorliegenden Langgutes erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Längsschnitt durch eine schematisierte Darstellung eines lösungsgemäß ausgebildeten Werkzeuges,
- Fig. 2a, b: erste Ausführungsform eines lösungsgemäß ausgebildeten Werkzeuges,
- Fig. 3: zweite Ausführungsform eines lösungsgemäß ausgebildeten Werkzeuges,
- Fig. 4: Zusatzeinrichtung für die zweite Ausführungsform,
- Fig. 5: Kombination aus der ersten und zweiten Ausführungsform und
- Fig. 6: dritte Ausführungsform eines lösungsgemäß ausgebildeten Werkzeuges.

### Wege zur Ausführung der Erfindung, gewerbliche Verwendbarkeit

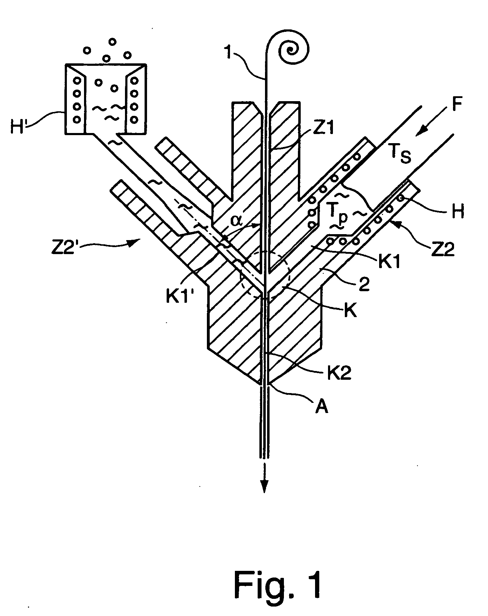

Fig. 1 zeigt einen Längsschnitt durch ein lösungsgemäß ausgebildetes Werkzeug zur Ummantelung eines als Meterware vorliegenden Langgutes 1, das der im Schnitt dargestellten Benetzungseinheit 2 lose zur Verfügung bzw. bereitgestellt wird. Das Langgut gelangt über einen ersten Zuführbereich Z1 in die Benetzungseinheit 2. Typischerweise ist der erste Zuführbereich Z1 als ein die Benetzungseinheit 2 vollständig durchdringender Hohlkanal ausgebildet, der im unteren Ende der Benetzungseinheit 2 im Austrittsbereich A offen mündet. Ferner ist wenigstens ein zweiter Zuführbereich Z2 vorgesehen, durch den fließfähiges Thermoplast T_{f} in eine Kontaktzone K zugeführt wird, durch die das Langgut 1 lose hindurch geführt ist. - Zur Illustration von zwei unterschiedlich ausgebildeten zweiten Zuführbereichen wird zunächst Bezug genommen auf die rechte Seite des in Figur 1 dargestellten Schnittbildes. Eine zweite Variante zeigt die linke Seite des Schnittbildes, auf die weiter unten Bezug genommen wird. - Das fließfähige Thermoplast T_{f} wird in dem in Fig. 1 illustrierten Fall in Form eines Festthermoplaststranges Tₛ bereitgestellt, der in einen erweiterten Bereich des zweiten Zuführbereiches Z2 kraftbeaufschlagt eingeführt wird, der mit Hilfe einer Heizanordnung H beheizt ist. Durch thermischen Kontakt des mit Druck gegen die zweite Zuführeinheit Z2 geführten festen Thermoplaststranges erweicht das Thermoplast und geht in den flüssigen Zustand über und gelangt unter Druck in die Kontaktzone K, die in Fig. 1 mit einem strichlierten Kreis gekennzeichnet ist, in der sich das Langgut 1 befindet. Das fließfähige Thermoplast T_{f} gelangt mit einer durch die Kanalgeometrie des zweiten Zuführbereiches Z2 vorgegebenen Strömungsrichtung in die Kontaktzone K und mündet in den weiterführenden Kanalabschnitt K2, der am Austrittsbereich A mündet. In der Kontaktzone K wird durch Reibkontakt zwischen dem fließfähigen Thermoplast T_{f} und dem Langgut 1 somit das Langgut durch den Kanalabschnitt K2 in Richtung des Austrittsbereiches A mitgeführt. Hier tritt das mit dem Thermoplast ummantelte Langgut nach unten aus.

Eine weitere Alternative für eine druckbeaufschlagte Zuführung von flüssigem Thermoplast in die Kontaktzone K ist in der linken Hälfte des dargestellten Schnittbildes gemäß Fig 1 illustriert. Im Unterschied zum bereits erläuterten Fall wird. das Thermoplast Tₛ als festes Granulat bereitgestellt und in eine zum Aufschmelzen der Granulatkörner vorgesehene Heizanordnung H' eingebracht. Die Heizanordnung H' ist mittel- oder unmittelbar fluidisch mit dem Zuführbereich Z2' der Benetzungseinheit 2 verbunden, längs der das fließfähige Granulat T_{f} druckbeaufschlagt in die Kontaktzone K gelangt. Der dem zweiten Zuführbereich Z2' zuordenbare Zuführkanal K1' mündet in die Kontaktzone K unter einem Winkel α, für den gilt: 10° < = α < = 80°, vorzugsweise α < = 45°. Auf diese Weise ist gewährleistet, dass die in die Kontaktzone K gelangende Strömung aus fließfähigem Thermoplast T_{f} eine in Richtung des Kanalabschnittes K2 orientierte Fließrichtung besitzt, wodurch das längs des ersten Zuführbereiches Z1 geführte Langgut 1 mit der Ausbildung eines Reibschlusskontaktes längs des Kanalabschnittes K2 durch die Austrittsöffnung A mitgeführt wird.

Die zwei in Fig. 1 illustrierten Ausführungsbeispiele für die Realisierung einer kraftbeaufschlagten Zuführung eines fließfähigen Thermoplasts in die Kontaktzone können jeweils getrennt voneinander sowie auch in Kombination im Rahmen einer einzigen Benetzungseinheit 2 ausgeführt sein. Die Benetzungseinheit 2 stellt somit einen einstückigen düsenartig ausgebildeten Körper dar, der mit Hilfe generativer Herstellungstechniken, wie beispielsweise selektives Laserschmelzen etc. herstellbar ist. In bevorzugter Ausfertigung besteht die Benetzungseinheit 2 aus metallischem Material, das über eine hohe thermische Leitfähigkeit verfügt, um sicherzustellen, dass beispielsweise eine in der Benetzungseinheit 2 integrierte Heizanordnung H, wie dies im Ausführungsbeispiel gemäß Fig. 1 in der rechten Figurendarstellung der Fall ist, das zugeführte, in fester Form vorliegende thermoplastische Material Tₛ zur Schmelze gebracht werden kann.

Die Benetzungseinheit 2 ist beliebig skalierbar und für unterschiedlichste Anwendungszwecke individuell ausführbar. Durch den Wegfall jeglicher Fördermechanismen zur Durchführung des Langgutes 1 durch die Benetzungseinheit 2 ist das Werkzeug insbesondere klein und leicht ausführbar und daher grundsätzlich zur Anbringung an robotergeführte Manipulator Endarme geeignet.

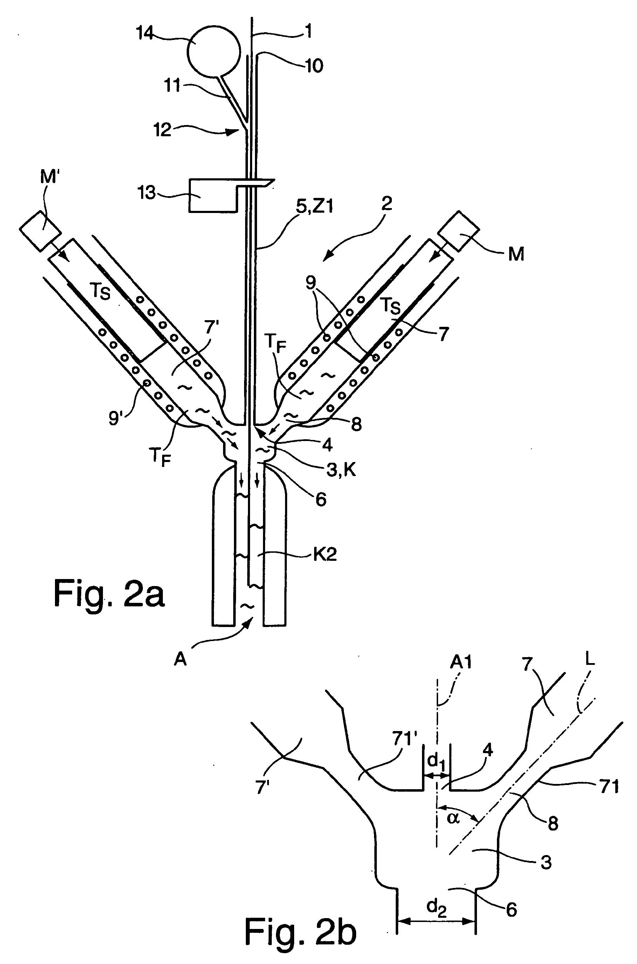

Figur 2a zeigt in schematisierter Darstellung die wesentlichen Komponenten eines lösungsgemäßen Werkzeuges zur Ummantelung eines Langgutes 1 mit thermoplastischem Material. Gleichsam wie in Fig. 1 sieht das Werkzeug als ersten Zuführbereich Z1 einen Zuführkanal 5 vor, der über eine obere Kanalöffnung 10 sowie eine in die als Kammer 3 ausgebildete Kontaktzone K mündende Eintrittsöffnung 4 verfügt. Durch den Zuführkanal 5 ist lose ein Langgut 1, vorzugsweise in Form von Fasern, wie Endlosfasern, Faserbündel, Stapelfasergarne etc. hindurchgeführt. An der Eintrittsöffnung 4, der Kammer 3 gegenüberliegend, ist koaxial eine Austrittsöffnung 6 vorgesehen, deren Durchmesser d2 vorzugsweise größer bemessen ist als der Durchmesser d1 des Zuführkanals 5 am Ort der Eintrittsöffnung 4. Zur Illustration der Kammergeometrie sei in diesem Zusammenhang auf die Detaildarstellung in Fig. 2b verwiesen, die die Kammer 3 mit den angrenzenden Zu- und Ableitungen, wie nachstehend erläutert, zeigt.

In die Kammer 3 mündet seitlich zum Zuführkanal 5 ein als Förderleitung 7 ausgebildeter zweiter Zuführbereich Z2, durch den fließfähiges Thermoplast in die Kammer 3 eingebracht wird. Die Förderleitung 7 mündet über einen im Querschnitt verjüngten Leitungsabschnitt 71 in die Kammer 3 ein, wobei der Leitungsabschnitt 71 eine Leitungsachse L aufweist, die gegenüber der dem Zuführkanal 5 zuordenbaren Achse A1 schräg geneigt ist und einen Winkel α einschließt, der im Bereich zwischen 10° und 80°, vorzugsweise 45° ± 20° beträgt. Durch die schräge Einmündung der Förderleitung 7, bzw. 71 in die Kammer 3 ist sichergestellt, dass der durch die Förderleitung 7 bzw. 71 in die Kammer 3 einströmende Materialstrom aus fließfähigem Thermoplast eine Strömungsrichtung besitzt, die in Richtung der Austrittsöffnung 6 orientiert ist. Zudem verfügt die Kammer 3 über eine Kammerwand-Innenkontur, die eine Abströmung von in die Kammer 3 eingebrachten fließfähigen Thermoplast durch die Austrittsöffnung 6 unterstützt.

Die Kammer 3 weist zudem eine konzentrisch, vorzugsweise kreisförmig um das durch die Kammer 3 geführte Langgut 1 auf, so dass das in die Kammer 3 eingebrachte thermoplastische Material das Langgut 1 allumfassend zu umschließen bzw. zu benetzen vermag.

Nicht notwendigerweise jedoch in vorteilhafter Form ist symmetrisch zur Achse A1 eine weitere Förderleitung 7' vorgesehen, die in gleicher Weise über einen Leitungsabschnitt 71' in die Kammer 3 einmündet. Durch eine symmetrische Zuführung von fließfähigem Thermoplast in die Kammer 3 kann eine gleichmäßige Ummantelung des Langgutes 1 mit thermoplastischem Material unterstützt werden.

Wie bereits unter Bezugnahme auf Figur 1 erwähnt, erfolgt die Zuführung von Thermoplast in Form eines festen Thermoplaststranges Tₛ, der in die einzelnen Förderleitungen 7, 7' kraftbeaufschlagt eingeschoben wird. Hierzu dient ein Mittel M, M' das den festen Thermoplaststrang Ts jeweils längs der Förderleitung 7, 7' presst. Eine längs der Förderleitung 7, 7' vorgesehene Heizanordnung 9, 9' vermag das jeweils der Kammer 3 zugewandte Ende des festen Thermoplaststrang Ts aufzuschmelzen.

Durch die längs zur Achse A1 symmetrische Zuführung von fließfähigem thermoplastischem Material T_{F} in die Kammer 3 wird das lose durch den Zuführkanal 5 in die Kammer 3 mündende Langgut 1 in Richtung der Austrittsöffnung 6 reibungsbedingt mitgeführt. Typischerweise schließt sich an die Austrittsöffnung 6 ein weiterer Strömungskanal K2 an, der am Austrittsbereich A des Werkzeuges offen mündet.

Längs des Zuführkanals 5 ist ferner eine Trennvorrichtung 13 angebracht, die bedarfsweise das durch den Zuführkanal 5 geführte Langgut 1 zu durchtrennen vermag. Zur Ausbildung der Trennvorrichtung stehen dem Fachmann die ihm bekannten Trenntechniken zur Verfügung, bspw. in Form einer mechanischen Trennvorrichtung mit einer seitlich zum Zuführkanal 5 beweglich gelagerten Klinge, oder eine thermische Trennvorrichtung, bspw. in Form einer Heizdrahtanordnung, die das Langgut lokal durch Aufschmelzung zu trennen vermag, etc.

Mit Hilfe der Trennvorrichtung 13 ist es möglich das Werkzeug bedarfsweise für den ausschließlichen Austrag von thermoplastischem Material durch die Austrittsöffnung ohne Zuführung eines Langgutes einzusetzen.

Um das Langgut 1 für eine erneute Austragung durch das Werkzeug in den Bereich der Kammer 3 zuzuführen, ist längs des Zuführkanals 5 im Bereich zwischen der oberen Eintrittsöffnung 10 und der Trennvorrichtung 13 ein Fördermittel 14 vorgesehen, das bspw. in Form einer Druckluftquelle ausgebildet ist und über eine Verbindungskanal 11 Druckluft in den Zuführkanal 5 einspeist, wodurch das lose in den Zuführkanal 5 mündende Langgut 1 in Richtung der Kammer 3 geschoben bzw. geblasen wird. Sobald das Langgut 1 in Kontakt mit dem fließfähigen Thermoplast T_{F} im Bereich der Kammer 3 tritt, wird das Langgut 1 durch die Thermoplastströmung mitgezogen.

Handelt es sich bei dem Langgut 1 bspw. um eine Faser mit einer sehr glatten Oberfläche, wie dies bspw. bei optischen Fasern der Fall ist, so eignet sich als Fördermittel 14 anstelle einer Druckluftquelle ein motorisch angetriebenes Rollenpaar im Bereich der Eintrittsöffnung 10, durch das das Langgut 1 in Kontakt mit dem fließfähigen Thermoplast in der Kammer 3 gelangen kann.

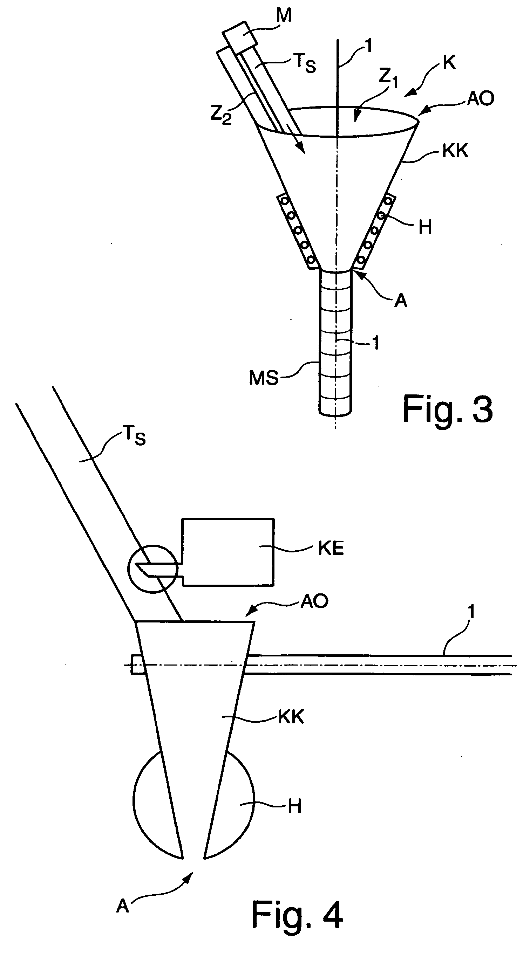

Figur 3 zeigt eine weitere Ausführungsform für die Ausbildung des Werkzeuges, bei der der erste und zweite Zuführbereich Z1, Z2 in einer konisch ausgebildeten Kammer KK münden, die über eine sich in Richtung des Austrittsbereiches A konisch verjüngende Wandkontur verfügt. Die konisch ausgebildete Kammer KK weist eine dem Austrittsbereich A gegenüberliegende trichterförmige Aufnahmeöffnung AO auf, relativ zu der ein Mittel M raumfest angeordnet ist, durch das das thermoplastische Material in Form eines festen Thermoplaststranges Tₛ druckbeaufschlagt in die konisch ausgebildete Kammer KK in Richtung des Austrittsbereiches A eingeführt wird. Zusätzlich mündet durch die Aufnahmeöffnung AO das lose geführte Langgut 1 in die konische Kammer KK. Zumindest im Bereich des Austrittsbereiches A befindet sich eine Heizanordnung H an der konischen Kammer KK, durch die der Thermoplaststrang Tₛ erwärmt und in eine fließfähige Form überführt wird

Durch den Austrittsbereich A tritt das Langgut 1 gemeinsam mit dem thermoplastischen Material als Materialstrang MS aus.

In Figur 4 ist eine konstruktive Möglichkeit illustriert, mit der aufbauend auf dem in Figur 3 gezeigten Ausführungsbeispiel die Zuführung des Langgutes 1 unterbrochen werden kann, so dass durch den Austrittsbereich A der konischen Kammer KK ausschließlich ein Materialstrang aus thermoplastischem Material ausgetragen werden kann. Hierzu ist in Förderrichtung längs des Thermoplaststranges Ts vor der Aufnahmeöffnung AO der konischen Kammer KK eine Kerbeinrichtung KE vorgesehen, durch die längs des zugeführten Thermoplaststranges Ts eine Kerbe lokal eingebracht werden kann.

Im Unterschied zum Ausführungsbeispiel gemäß Figur 3 wird das Langgut 1 nicht durch den Aufnahmebereich AO in die konische Kammer KK geführt, sondern seitlich in die konische Kammer KK eingeführt, wie dies aus der Bilddarstellung gemäß Figur 4 zu entnehmen ist.

Das Langgut 1 erstreckt sich somit quer zur Zuführrichtung des Thermoplaststranges Ts durch den oberen Bereich der konischen Kammer KK derart, so dass das Langgut 1 an der Oberfläche des Thermoplaststranges Ts anliegt. Gelang nun die Oberflächenkerbe des Thermoplaststranges Ts in den Bereich des Langgutes 1, so mündet das Langgut 1 in die Kerbe ein und wird vom Thermoplaststrang Ts in Richtung der konischen Kammer KK mitgenommen und durch den Austrittsbereich A geführt.

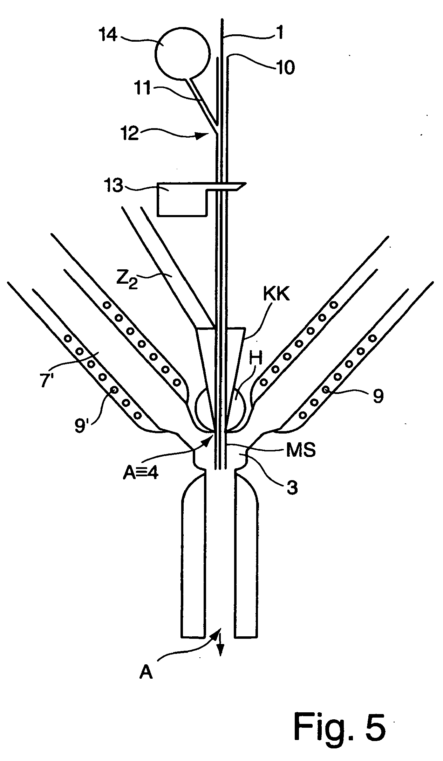

Auch ist es möglich, die in Figur 3 illustrierte konische Kammer KK mit dem in Figur 2 dargestellten Werkzeug zu kombinieren. Eine derartige Kombination ist in Figur 5 dargestellt. Hierbei entspricht der Austrittsbereich A der konischen Kammer KK der Eintrittsöffnung 4 der Kammer 3 des Werkzeuges. An der Funktionsweise aller bereits erläuterten Komponenten ändert sich in der Werkzeuganordnung gemäß Figur 5 nichts. Lediglich tritt im Unterschied zum Werkzeug gemäß Figur 2 ein mit Thermoplast ummantelter Materialstrang MS in die Kammer 3 ein, der durch die zusätzliche Zuführung von thermoplastischem Material innerhalb der Kammer 3 ein weiteres Mal eine Ummantelung mit thermoplastischem Material erfährt. Auf diese Weise ist es möglich, das Langgut 1 mit wenigstens zwei unterschiedlich thermoplastischen Materialien radial zu ummanteln. So könnte das Langgut 1 im Rahmen der konischen Kammer KK mit einem thermoplastischen Material einer ersten Art unmittelbar ummantelt werden und innerhalb der Kammer 3 mit einem thermoplastischen Material einer zweiten Art zusätzlich radial umgeben werden. Auch ist es möglich, die Kammer 3 über die Förderleitungen 7, 7' mit jeweils unterschiedlichen thermoplastischem Material zu befüllen.

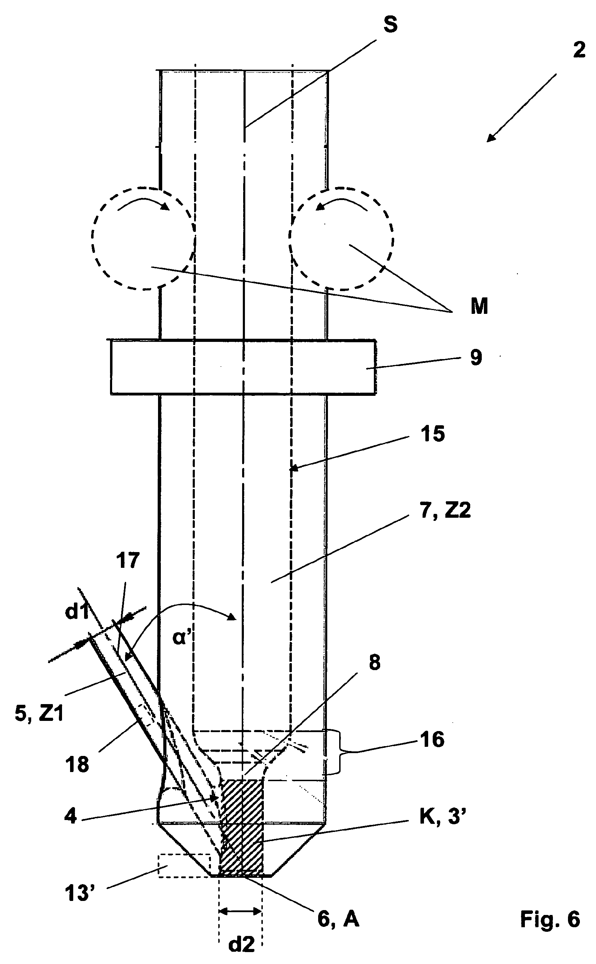

Figur 6 zeigt ein drittes Ausführungsbeispiel zur Realisierung eines lösungsgemäß ausgebildeten Werkzeuges zur Herstellung eines erwärmten, fließfähigen Thermoplaststranges, in dem bedarfsweise ein Langgut in Form einer Faser bzw. eines Faserbündels einbringbar ist. Hierzu sieht das als Benetzungseinheit 2 ausgebildete Werkzeug einen hohlzylinderförmigen Abschnitt 15 vor, vorzugsweise in Form eines Metallhohlzylinders, der dem zweiten Zuführungsbereich Z2 entspricht, durch den das feste strangförmig, ebenso als Meterware vorliegende Thermoplast einführbar ist. In der Bilddarstellung gemäß Figur 6 sei angenommen, dass der feste, vorzugsweise zylinderförmig ausgebildete Thermoplaststrang von oben in die Förderleitung 7 des Abschnittes 15 eingeführt wird, längs der zwei als Förderwalzen ausgebildete Transportmittel M angebracht sind, die jeweils motorisch angetrieben und einen entgegengesetzt orientierten Drehsinn aufweisen, durch die der feste Thermoplaststrang von oben nach unten kraft- bzw. druckbeaufschlagt gefördert wird. Eine längs der Förderleitung 7 vorgesehene Heizeinrichtung 9 sorgt für ein Erweichen des festen Thermoplaststranges, so dass sichergestellt ist, dass das längs der Förderleitung 7 geführte Thermoplast im unteren Bereich der Förderleitung 7 in den fließfähigen Zustand überführt ist.

Der hohlzylinderförmige Abschnitt 15 der Förderleitung 7 weist einen weitgehend konstanten Kanalquerschnitt auf, der sich im unteren Bereich längs des sogenannten Übergangsbereichs 16 auf einen kleineren Durchmesser entsprechend der Leitungsöffnung 8 kontinuierlich verjüngt. An die Leitungsöffnung 8 schließt sich die Kontaktzone K in Form einer zylinderförmig ausgebildeten Kammer 3' an, die eine untere Austrittsöffnung 6 aufweist. Sowohl der hohlzylinderförmige Abschnitt 15 der Förderleitung 7 als auch der Übergangsbereich 16 sowie die Leitungsöffnung 8 und Austrittsöffnung 6 sind von einer gemeinsamen Symmetrieachse S durchsetzt.

Der längs der Förderleitung 7, mit Hilfe der Förderwalzen M geförderter, als Meterware vorliegender Thermoplaststrang (nicht dargstellt) weist einen Strangdurchmesser auf, der dem Innendurchmesser des hohlzylinderförmigen Abschnittes 15 entspricht. Auf diese Weise wird verhindert, dass erweichtes und fließfähiges Thermoplastmaterial, das sich in Förderrichtung stromauf zum Übergangsbereich 16 ausbildet, rückwärts zur Förderrichtung durch den hohlzylinderförmigen Abschnitt 15 entweichen kann. Auf diese Weise gelangt das erweichte Thermoplastmaterial in den Übergangsbereich 16, durch dessen kontinuierliche Durchmesserverjüngung in Förderrichtung das fließfähige Thermoplastmaterial eine signifikante Druckerhöhung mit einem maximalen Förderdruck im Bereich der Leitungsöffnung 8 bei Eintritt in die Kammer 3' und Durchtritt durch die Kammer 3' erfährt.

Seitlich in die Kammer 3' mündet der Zugführkanal 5 des ersten Zuführbereiches Z1, durch den ein nicht in der Figur 6 dargestelltes Langgut, vorzugsweise in Form eines Faserbündels oder einer Einzelfaser kraftfrei zugeführt wird. Die Bevorratung der Faser erfolgt vorzugsweise von einer Reservoirrolle, von der die als Endloslanggut bevorratete Faser kraftfrei abgewickelt wird.

Gelangt die längs des Zuführkanals 5 zugeführte Faser in den Bereich der Kontaktzone K, so wird die Faser aufgrund auftretender Reibkräfte vom fließfähigen Thermoplaststrang erfasst und mitgeführt und letztlich in Form eines erweichten Thermoplaststranges durch die Austrittsöffnung 6 ausgetragen. Die Faser bzw. das Faserbündel weist einen Faserdurchmesser bzw. Faserbündeldurchmesser auf, der in etwa dem Durchmesser d1 des Zuführkanals 5 entspricht. Auf diese Weise sorgt die Faser selbst dafür, dass erweichtes Thermoplastmaterial nicht durch die Eintrittsöffnung 4, über die der Zuführkanal 5 in die Kammer 3 mündet, seitlich entweichen kann. Die Dimensionierung der Austrittsöffnung 6 ist derart gewählt, so dass grundsätzlich der Durchmesser d2 der Austrittsöffnung 6 größer als d1 gewählt ist, vorzugsweise gilt hierbei 0,1 d2 ≤ d1 ≤ 0,8 d2.

Zur Vermeidung von zu kleinen Biegeradien, die die Faser während der Zu- und Durchführung durch die Benetzungseinheit 2 unterliegen kann, schließen die dem Zuführkanal 5 zuordenbare Kanalachse 17 und die Symmetrieachse S einen Winkel α' ein, für den gilt 10° ≤ α' ≤ 80°.

Selbstverständlich kann längs des Zuführkanals 5 für ein Unterbrechen der Faserzuführung eine Trennvorrichtung vorgesehen sein, wie sie bspw. aus den Figuren 2a, 4 und 5 entnommen werden kann. Ebenso ist es denkbar, eine entsprechende Trennvorrichtung 13' auch im Anschluss oder im Bereich der Austrittsöffnung 6 vorzusehen, wobei in diesem Fall zusätzlich dafür Sorge getragen werden muss, dass zumindest längs des Zuführkanals 5 eine entsprechende Faserhalteeinrichtung 18, vorzugsweise in Form einer Klemmvorrichtung, vorgesehen sein sollte, um zu verhindern, dass das in die Kammer 3' durch die Eintrittsöffnung 4 einmündende Faserende vom durch die Austrittöffnung 6 austretenden Thermoplaststrang mitgeführt wird. Durch eine im Bereich der Austrittsöffnung 6 vorgesehene Trennvorrichtung 13' in Kombination mit einer entsprechenden Faserarretierung 18 längs des Zuführkanals 5 kann auf eine in Verbindung mit den vorstehenden Ausführungsbeispielen gemäß Figuren 2a, 4 und 5 erläuterte Fördereinrichtung verzichtet werden. Gilt es die Zuförderung der Faser längs des austretenden Thermoplaststranges wieder zu aufzunehmen, so bedarf es lediglich einem Lösen der Faserhalteeinrichtung 18, wodurch die Faser erneut, kraftfrei der Kammer 3' zugeführt wird, ausschließlich bedingt durch längs der Faser wirkenden Zugkräften, die von zwischen der Faser und dem erweichten, aus der Austrittsöffnung austretenden Thermoplastmaterial auftretenden stofflich bedingten Reibschlusskräften herrühren.

### Bezugszeichenliste

- A: Austrittsbereich
- K: Kontaktzone
- KK: Konische Kammer
- AO: Aufnahmeöffnung
- M, M': Mittel zur Druckbeaufschlagung eines Thermoplaststranges
- Z1, Z1': Erster Zuführbereich
- Z2, Z2': Zweiter Zuführbereich
- MS: Materialstrang
- A1: Erste Achse
- L: Leitungsachse
- KE: Kerbeinrichtung
- K1, K1': Erster Hohlkanal
- K2, K2': Zweiter Hohlkanal
- Ts: Thermoplaststrang
- T_{F}: Fließfähiges Thermoplast
- S: Symmetrieachse
- 1: Langgut
- 2: Werkzeug, Benetzungseinheit
- 3, 3': Kammer
- 4: Eintrittsöffnung
- 5: Zuführkanal
- 6: Austrittsöffnung
- 7, 7': Förderleitung
- 71: Leitungsabschnitt
- 8: Leitungsöffnung
- 9, 9': Heizanordnung
- 10: Kanalöffnung
- 11: Zusatzleitung
- 13: Trennvorrichtung
- 14: Fördermittel
- 15: hohlzylinderförmige Abschnitt
- 16: Übergangsbereich
- 17: Kanalachse
- 18: Faserhaltevorrichtung

## Patentansprüche

1. Werkzeug zur Ummantelung eines als Meterware vorliegenden Langgutes (1), insbesondere in Form einer Faser oder eines Faserbündels, mit wenigstens einer Thermoplastschicht, mit einer Benetzungseinheit (2), die wenigstens eine mit einem fließfähigen Thermoplast befüllbare Kontaktzone (K) umfasst, durch die das Langgut (1) zu Zwecken einer Benetzung mit dem Thermoplast in Form eines kontinuierlich fortlaufenden Stranges führbar ist,
wobei in die wenigstens eine Kontaktzone (K) wenigstens ein erster Zuführbereich (Z1) für das Langgut (1) sowie ein zweiter Zuführbereich (Z2) für das Thermoplast münden und die Kontaktzone (K) wenigstens einen Austrittsbereich (A) aufweist, und
wobei längs des zweiten Zuführbereiches (Z2) ein Mittel (M) angebracht ist, durch das das Thermoplast druckbeaufschlagt in die Kontaktzone (K) in Richtung des Austrittsbereiches (A) einbringbar ist,
**dadurch gekennzeichnet, dass** in der Kontaktzone (K) das Thermoplast das in die Kontaktzone (K) geführte Langgut (1) ausschließlich durch Reibkraft zwischen dem Thermoplast und dem Langgut (1) längs durch den Austrittsbereich (A) mitführt, und dass der erste Zuführbereich (Z1) und eine das Langgut bevorratende Einheit derart ausgebildet und angeordnet sind, dass das Langgut lose, d.h. kraftfrei, in den ersten Zuführbereich (Z1) zuführbar ist.

2. Werkzeug nach Anspruch 1,
**dadurch gekennzeichnet, dass** im Bereich der Kontaktzone (K) und/oder längs des zweiten Zuführbereiches (Z2) eine Heizanordnung (H) angebracht ist, und
dass die Kontaktzone (K), der zweite Zuführbereich (Z2) sowie die Heizanordnung (H) derart ausgebildet und angeordnet sind, dass das Thermoplast in Form eines festen Materialstranges durch den zweiten Zuführbereich (Z2) in den Bereich der Heizanordnung kraftbeaufschlagt zuführbar und durch Erwärmung in fließfähiges Thermoplast überführbar ist.

3. Werkzeug nach Anspruch 1 oder 2,
**dadurch gekennzeichnet, dass** die Kontaktzone (K) in Form einer konisch ausgebildeten Kammer (KK) ausgebildet ist, die über eine sich in Richtung des Austrittsbereiches (A) konisch verjüngende Kontur verfügt.

4. Werkzeug nach Anspruch 3,
**dadurch gekennzeichnet, dass** die konisch ausgebildete Kammer (KK) eine dem Austrittbereich (A) gegenüberliegende trichterförmige Aufnahmeöffnung (AO) aufweist, zu der das Mittel (M), durch das das Thermoplast druckbeaufschlagt in die Kontaktzone (K) in Richtung des Austrittsbereiches (A) einbringbar ist, raumfest angeordnet ist.

5. Werkzeug nach Anspruch 1 oder 2,
**dadurch gekennzeichnet, dass** die Kontaktzone (K) in Form einer zylindrisch ausgebildeten Kammer (3') ausgebildet ist.

6. Werkzeug nach Anspruch 3 oder 4 oder 5,
**dadurch gekennzeichnet, dass** das Mittel (M) derart ausgebildet und angeordnet ist,
dass das Mittel (M) einen Strang aus festem Thermoplast kraftbeaufschlagt in Richtung des Austrittsbereiches (A) der konisch oder zylindrisch ausgebildeten Kammer (KK) fördert, und dass die Heizanordnung (H) derart ausgebildet und mit der Kontur (K) in thermischen Kontakt steht, dass das feste Thermoplast erwärmt und in einen fließfähigen Zustand überführbar ist, in dem das fließfähige Thermoplast als Materialstrom (MS) durch den Austrittsbereich (A) der konisch oder zylindrisch ausgebildeten Kammer (KK) austritt und das Langgut (1) in dessen Innerem umschließt und mitführt.

7. Werkzeug nach Anspruch 1 oder 2,
**dadurch gekennzeichnet, dass** die wenigstens eine Kontaktzone (K) als Kammer (3) innerhalb der Benetzungseinheit (2) ausgebildet ist,
dass die Benetzungseinheit (2) einen über eine Eintrittsöffnung (4) in die Kammer (3) mündenden Zuführkanal (5) als ersten Zuführbereich (Z1) sowie eine an der Kammer (3) angeordnete als Austrittbereich (A) dienende Austrittsöffnung (6) vorsieht,
dass die Austrittsöffnung (6) der Eintrittsöffnung (4) an der Kammer (3) gegenüberliegend und koaxial zu dieser angeordnet ist und über einen größeren Durchmesser (d2) als der Durchmesser (d1) der Eintrittsöffnung (4) verfügt,
dass in die Kammer (3) wenigstens eine Förderleitung (7) als zweiter Zuführbereich (Z2) über eine Leitungsöffnung (8) mündet, längs der das Mittel (M) vorgesehen ist, durch das fließfähiges Thermoplast druckbeaufschlagt in die Kammer (3) einbringbar ist, und
dass die Kammer (3) und die wenigstens eine Leitungsöffnung (8) derart angeordnet und ausgebildet sind, dass das aus der Förderleitung (7) durch die Leitungsöffnung (8) in die Kammer (3) gelangende, fließfähige Thermoplast eine in Richtung der Austrittsöffnung (6) gerichtete Fliessrichtung aufweist.

8. Werkzeug nach Anspruch 7,
**dadurch gekennzeichnet, dass** die an der Kammer (3) jeweils gegenüberliegend angebrachte Ein- (4) und Austrittsöffnung (6) koaxial zu einer ersten Achse (A1) ausgerichtet sind,
dass die Förderleitung (7) einen unmittelbar an die Leitungsöffnung (8) angrenzenden Leitungsabschnitt (71) aufweist, dem eine Leitungsachse (L) zuordenbar ist, die mit der ersten Achse (A1) einen Winkle α ungleich 90°, insbesondere 10° ≤ α ≤ 80°, einschliesst.

9. Werkzeug nach Anspruch 7 oder 8,
**dadurch gekennzeichnet, dass** längs der Förderleitung (7) eine Heizeinrichtung (9) angebracht ist.

10. Werkzeug nach einem der Ansprüche 7 bis 9,
**dadurch gekennzeichnet, dass** der Zuführkanal (5) eine der Eintrittsöffnung (4) längs des Zuführkanals (5) gegenüberliegende Kanalöffnung (10) aufweist, und
dass längs des Zuführkanals (5) eine Trennvorrichtung (13) angebracht ist zum Durchtrennen des innerhalb des Zuführkanals (5) geführten Langgutes (1).

11. Werkzeug nach Anspruch 10,
**dadurch gekennzeichnet, dass** längs des Zuführkanals (5) ein Fördermittel (14) angebracht ist, das mittel- oder unmittelbar in Wirkverbindung mit dem Langgut bringbar ist, um das Langgut kraftbeaufschlagt längs des Zuführkanals (5) zu führen.

12. Werkzeug nach Anspruch 10,
**dadurch gekennzeichnet, dass** das Fördermittel als Druckluftquelle ausgebildet ist, die mit einer in den Zuführkanal (5) mündenden Zusatzleitung (11) verbunden ist, oder
dass das Fördermittel ein angetriebenes Rollenpaar vorsieht, durch das das Langgut mittels Reibschluss führbar ist.

13. Werkzeug nach einem der Ansprüche 7 bis 12,
**dadurch gekennzeichnet, dass** die Eintrittsöffnung (4) des in die Kammer (3) mündenden Zuführkanals (5) dem Austrittsbereich (A) der konisch ausgebildeten Kammer (KK) nach Anspruch 3 oder 4 entspricht.

14. Werkzeug nach einem der Ansprüche 2 bis 5,
**dadurch gekennzeichnet, dass** die wenigstens eine Kontaktzone (K) als Kammer (KK) innerhalb der Benetzungseinheit (2) ausgebildet ist,
dass in die Kammer (KK) wenigstens eine Förderleitung (7) als zweiter Zuführbereich (Z2) über eine Leitungsöffnung (8) mündet, längs der das Mittel (M) vorgesehen ist, einbringbar ist,
dass die Benetzungseinheit (2) wenigstens einen jeweils über eine Eintrittsöffnung (4) in die Kammer (KK) mündenden Zuführkanal (5) als ersten Zuführbereich (Z1) sowie eine an der Kammer (KK) angeordnete als Austrittbereich (A) dienende Austrittsöffnung (6) vorsieht,
dass die Austrittsöffnung (6) über einen größeren Durchmesser (d2) als der Durchmesser (d1) der Eintrittsöffnung (4) verfügt,
und
dass die Kammer (KK) und die wenigstens eine Leitungsöffnung (8) derart angeordnet und ausgebildet sind, dass das aus der Förderleitung (7) durch die Leitungsöffnung (8) in die Kammer (KK) gelangende, fließfähige Thermoplast eine in Richtung der Austrittsöffnung (6) gerichtete Fliessrichtung aufweist.

15. Werkzeug nach Anspruch 14,
**dadurch gekennzeichnet, dass** die Förderleitung (7) einen hohlzylinderförmigen Abschnitt aufweist längs dem das Mittel (M) in Form eines Förderwalzen- oder rollenpaars mit jeweils entgegengesetzt angetriebenen Drehsinn angeordnet ist, das in beidseitigem Eingriff mit einem als festen Thermoplaststrang bringbar ist, der durch die Förderleitung (7) in Richtung der Kammer (KK) zuführbar ist,
dass der hohlzylinderförmige Abschnitt einen größeren Innendurchmesser aufweist als der Durchmesser der Leitungsöffnung (8), wobei der Innendurchmesser des hohlzylindrischen Abschnittes (15) in einem Übergangsbereich (16) kontinuierlich in den Durchmesser der Leitungsöffnung (8) übergeht,
dass der hohlzylinderförmige Abschnitt (15), der Übergangsbereich (16), die Leitungsöffnung (8), die Kammer (KK) sowie die Austrittsöffnung (6) von einer gemeinsamen Achse durchsetzt sind,
dass der wenigstens eine Zuführkanal (5) für das Langgut eine Kanalachse (17) aufweist, die mit der Symmetrieachse (S) einen Winkel α' einschließt, für den gilt: 10° ≤ α' ≤ 80°.

16. Werkzeug nach einem der Ansprüche 1 bis 15,
**dadurch gekennzeichnet, dass** die Benetzungseinheit als portable Einheit ausgebildet und mittels eines generativen Herstellungsverfahrens in einstückiger Bauweise gefertigt ist.

17. Verfahren zur Ummantelung eines als Meterware vorliegenden Langgutes (1), insbesondere in Form einer Faser oder eines Faserbündels, mit wenigstens einer Thermoplastschicht, bei dem das Langgut (1) in Form eines kontinuierlich fortlaufenden Stranges durch eine mit einem fließfähigen Thermoplast befüllbare Kontaktzone (K) und über einen Austrittsbereich (A) aus der Kontaktzone (K) heraus geführt wird, und bei dem das fließfähige Thermoplast mit einer in Richtung des Austrittsbereiches (A) vorgegebenen Fließrichtung in die Kontaktzone (K) druckbeaufschlagt eingebracht wird,
**dadurch gekennzeichnet, dass** das Langgut (1) ausschließlich durch Reibungskräfte, die zwischen dem Langgut (1) und dem fließfähigen Thermoplast innerhalb der Kontaktzone (K) wirken, durch die Kontaktzone (K) gezogen wird.

18. Verfahren nach Anspruch 17,
**dadurch gekennzeichnet, dass** das Langgut kraftfrei, d.h. ohne längs des Langgutes wirkenden Zug- oder Druckkräfte, in die Kontaktzone (K) eingefädelt wird.

## Claims

1. Tool for sheathing an elongate product (1) available by the meter, particularly in the form of a fiber or fiber bundle, having at least one thermoplastic layer, with a wetting unit (2) comprising at least one contact zone (K) that can be filled with a flowable thermoplastic, through which the elongate product (1) can be guided for purposes of wetting with the thermoplastic in form of a continuously progressing strand,
wherein at least one first infeed area (Z1) for the elongate product (1) and at least one second infeed area (Z2) for the thermoplastic open into the at least one contact zone (K), and the contact zone (K) has at least one outlet area (A), and wherein a means (M) is provided along the second infeed area (Z2) through which the thermoplastic can be introduced under pressure into the contact zone (K) in the direction of the outlet area (A),
**characterized in that** in the contact zone (K) the thermoplastic pulls the elongate product (1) fed into the contact zone (K) along through the outlet area (A) solely by the frictional force between the thermoplastic and the elongate product (1), and that the first infeed area (Zl) and a unit holding a store of the elongate product are designed and arranged in such manner that the elongate product can be fed into the first infeed area (Z1) in loose manner, that is to say without the application of force.

2. Tool according to claim 1,
**characterized in that** a heating arrangement (H) is provided in the region of the contact zone (K) and/or along the second infeed (Z2), and that the contact zone (K), the second infeed (Z2) and the heating arrangement (H) are designed and arranged in such manner that the thermoplastic in the form of a solid strand, can be guided through the second infeed area (Z2) into the region of the heating arrangement (H) by the application of force and converted into a flowable thermoplastic by warming.

3. Tool according to claim 1 or 2,
**characterized in that** the contact zone (K) is constructed in the form of a conically shaped chamber (KK) which has a contour that tapers conically in the direction of the outlet area (A).

4. Tool according to claim 3,
**characterized in that** the conically shaped chamber (KK) has a funnel-shaped receiving opening (AO) disposed opposite outlet area (A), relative to which means (M) is arranged in spatially fixed manner, through which means the thermoplastic can be introduced into the contact zone (K) under pressure in the direction of the outlet area (A).

5. Tool according to claim 1 or 2,
**characterized in that** the contact zone (K) is designed in the form of a cylindrical chamber (3').

6. Tool according to claim 3 or 4 or 5,
**characterized in that** the means (M) is designed and arranged in such manner that that the means (M) advances a strand of solid thermoplastic under force in the direction of the outlet area (A) of the conically or cylindrically shaped chamber (KK), and that the heating arrangement (H) is designed and in thermal contact with the contour (K) in such manner that the solid thermoplastic is warmed and can be converted into a flowable state, in which the flowable thermoplastic exits through the outlet area (A) of the conically or cylindrically shaped chamber (KK) a material flow (MS), and inside said chamber surrounds and entrains the elongate product (1).

7. Tool according to claim 1 or 2,
**characterized in that** the at least one contact zone (K) is constructed as a chamber (3) inside the wetting unit (2),
that the wetting unit (2) provides an infeed channel (5) that opens into the chamber (3) via an inlet opening (4) as the first infeed area (Z1) and an outlet opening (6) arranged on the chamber (3), serving as outlet area (A), that the outlet opening (6) is arranged opposite the inlet opening (4) on the chamber (3) and coaxial therewith and has a larger diameter (d2) than the diameter (d1) of the inlet opening (4),
that at least one transport line (7) is provided as the second infeed area (Z2), and opens into the chamber (3) via a line opening (8) along which means (M) is provided, through which flowable thermoplastic can be introduced into chamber (3) under pressure, and
that the chamber (3) and the at least one line opening (8) are designed and arranged in such manner that the flowable thermoplastic exiting the transport line (7) through line opening (8) and entering chamber (3) has a direction of flow that is aligned in the direction of the outlet opening (6).

8. Tool according to claim 7,
**characterized in that** the inlet (4) and outlet opening (6) arranged opposite one another on the chamber (3) are aligned coaxially with a first axis (A1) ,
that the transport line (7) has a line section (71) immediately adjacent to the line opening (8), to which a line axis (L) can be assigned, and which forms an angle α not equal to 90° with the first axis (A1), particularly 10° ≤ α ≤ 80° therewith.

9. Tool according to claim 7 or 8,
**characterized in that** a heating arrangement (9) is mounted along the transport line (7).

10. Tool according to any one of claims 7 to 9,
**characterized in that** the infeed channel (5) has a channel opening (10) arranged along the infeed channel (5) opposite the inlet opening (4), and
that a separating device (13) is attached along infeed channel (5) to separate the elongate product (1) that is drawn inside.

11. Tool according to claim 10,
**characterized in that** a transport means (14) is attached along the infeed channel (5) and can be brought into direct or indirect operative cooperation with the elongate product so that it can guide the elongate product along the infeed channel (5) with the application of force.

12. Tool according to claim 10,
**characterized in that** the transport means is in the form of a compressed air source, which is connected to an additional line (11) that opens into infeed channel (5), or
that the transport means provides a motor-driven roller pair which is operable by the elongate products by means of friction.

13. Tool according to any of claims 7 to 12,
**characterized in that** the inlet opening (4) of the infeed channel (5) that opens into chamber (3) corresponds to the outlet area (A) of the conically shaped chamber (KK) according to claim 3 or 4.

14. Tool according to any of claims 2 to 5,
**characterized in that** the at least one contact zone (K) is designed in the form of a chamber (KK) inside the wetting unit (2),
that at least one transport line (7) is provided along means (M) as a second infeed area (Z2) and opens into the chamber (KK) via a line opening (8),
through which means flowable thermoplastic can be introduced into the chamber (KK) under force,
that the wetting unit (2) provides at least one infeed channel (5), each opening into the chamber (KK) via an inlet opening (4) as the first infeed area (Z1), and an outlet opening (6) arranged on the chamber (KK) as the outlet area (A),
that the outlet opening (6) has a larger diameter (d2) than the diameter (d1) of the inlet opening (4),
and
that the chamber (KK) and the at least one line opening (8) are designed and arranged in such manner that the flowable thermoplastic emerging from the transport line (7) into the chamber (KK) through the line opening (8) has a flow direction corresponding to the direction of the outlet opening (6).

15. Tool according to claim 14,
**characterized in that** the transport line (7) has a hollow-cylindrical section along which is arranged the means (M) in the form of a conveying roller or roller pair, rotating in opposite directions, and which may be brought into engagement on both sides with a solid thermoplastic strand, which can be fed through the transport line (7) towards the chamber (KK),
that the hollow-cylindrical section has a larger internal diameter and the diameter of line opening (8), wherein the internal diameter of the hollow-cylindrical section (15) is adapted continuously to the diameter of the line opening (8) in a transition region (16),
that a common axis passes through the hollow-cylindrical section (15) of the transition region (16), the line opening (8), the chamber (KK) and the outlet opening (6),
that the at least one infeed channel (5) has a channel axis (17) for the elongate product, which axis forms an angle α' with the axis of symmetry (S), for which 10° ≤ α' ≤ 80°.

16. Tool according to any one of claims 1 to 15,
**characterized in that** the wetting unit is constructed as a portable unit and is manufactured in a single-part construction method by a generative production process.

17. Method for sheathing an elongate product (1) available by the meter, in particular in the form of a fiber or fiber bundle, having at least one thermoplastic layer in which the elongate product (1) in the form of a continually advancing strand is guided through a contact zone (K) that can be filled with a flowable thermoplastic and drawn out of the contact zone (K) via an outlet area (A), and in which the flowable thermoplastic is introduced into the contact zone (K) with the application of force with a predetermined flow direction in the direction of outlet area (A),
**characterized in that** the elongate product (1) is drawn through contact zone (K) solely by frictional forces acting between the elongate product (1) and the flowable thermoplastic within the contact zone (K).

18. Method according to claim 17,
**characterized in that** the elongate product is threaded into the contact zone (K) without the application of force, that is to say without any tractive or compressive forces acting along the length of the elongate product.

## Revendications

1. Outil de revêtement d'un produit long (1) se présentant sous la forme d'une marchandise au mètre, notamment sous la forme d'une fibre ou d'un faisceau de fibres, comportant au moins une couche thermoplastique, comportant une unité de réticulation (2), qui comprend au moins une zone de contact (K) pouvant être remplie avec un thermoplastique fluide, à travers laquelle le produit long (1) peut être guidé à des fins de réticulation avec le thermoplastique sous la forme d'un tronçon avançant en continu,
dans lequel au moins une première zone d'introduction (Z1) du produit long (1) et une deuxième zone d'introduction (Z2) du thermoplastique débouchent dans au moins une zone de contact (K) et la zone de contact (K) présente au moins une zone de sortie (A) , et dans lequel le long de la deuxième zone d'introduction (Z2) un moyen (M) est monté, par l'intermédiaire duquel le thermoplastique peut être amené en étant sollicité par une pression dans la zone de contact (K) dans la direction de la zone de sortie (A),
**caractérisé en ce que** dans la zone de contact (K) le thermoplastique guide conjointement le produit long (1) guidé dans la zone de contact (K) exclusivement par force de friction entre le thermoplastique et le produit long (1) longitudinalement à travers la zone de sortie (A) et la première zone d'introduction (Z1) et une unité stockant le produit long sont conçus et disposés de telle sorte que le produit long puisse être introduit de manière relâchée, c'est-à-dire sans intervention de force, dans la première zone d'introduction (Z1).

2. Outil selon la revendication 1,
**caractérisé en ce que** au niveau de la zone de contact (K) et/ou le long de la deuxième zone d'introduction (Z2) est monté un dispositif de chauffage (H), et **en ce que** la zone de contact (K), la deuxième zone d'introduction (Z2) ainsi que le dispositif de chauffage (H) sont conçus et disposés de telle sorte que le thermoplastique puisse être introduit sous la forme d'un tronçon de matière solide à travers la deuxième zone d'introduction (Z2) dans la zone du dispositif de chauffage sous sollicitation d'une force et puise être transformé par réchauffement en thermoplastique fluide.

3. Outil selon la revendication 1 ou 2,
**caractérisé en ce que** la zone de contact (K) est conçus sous la forme d'une chambre à configuration. conique (KK), qui dispose d'un contour s'amincissant comiquement dans la direction de la zone de sortie (A).

4. Outil selon la revendication 3,
**caractérisé en ce que** la chambre à configuration conique (KK) présente une ouverture de réception (AO) en forme de trémie opposée à la zone de sortie (A), par rapport à laquelle le moyen (M), à travers lequel le thermoplastique peut être amené sous sollicitation de pression dans la zone de contact (K) dans la direction de la zone de sortie (A), est disposé de manière stationnaire.

5. Outil selon la revendication 1 ou 2,
**caractérisé en ce que** la zone de contact (K) est conçue sous la forme d'une chambre (3') à configuration cylindrique.

6. Outil selon la revendication 3 ou 4 ou 5,
**caractérisé en ce que** le moyen (M) est conçu et disposé de telle sorte que le moyen (M) transporte un tronçon d'un thermoplastique solide sous sollicitation d'une force dans la direction de la zone de sortie (A) de la chambre (KK) à configuration conique pou cylindrique, et **en ce que** le dispositif cde chauffage (H) est conçu et en contact thermique avec le contour (K) de telle sorte que le thermoplastique solide se réchauffe et soit passé à un état fluide, dans lequel le thermoplastique fluide comme flux de matière (MS) ressort à travers la zone de sortie (A) de la chambre (KK) à configuration conique ou cylindrique et enveloppe et guide conjointement le produit long (1) dans son espace interne.

7. Outil selon la revendication 1 ou 2,
**caractérisé en ce que** au moins une zone de contact (K) est conçue comme une chambre (3) à l'intérieur de l'unité de réticulation (2),
**en ce que** l'unïté de réticulation (2) présente un canal d'introduction (5) débouchant via une ouverture d'entrée (4) dans la chambre (3) comme première zone d'introduction (Z1) ainsi qu'une ouverture de sortie (6) servant de zone de sortie (A) disposée sur la chambre (3), **en ce que** l'ouverture de sortie (6) est disposée en vis-à-vis de l'ouverture d'entrée (4) sur la chambre (3) et disposée coaxialement à celle-ci et disposé d'un plus grand diamètre (d2) que le diamètre (d1) de l'ouverture d'entrée (4), **en ce que** dans la chambre (3) au moins une conduite de transport (7) faisant office de deuxième zone d'introduction (Z2) dispose via une ouverture de conduite (8), le long de laquelle le moyen (M) est prévu, à travers lequel le thermoplastique fluide peut être amené sous sollicitation de pression dans la chambre (3), **en ce que**
la chambre (3) et au moins une ouverture de conduite (8) sont disposées et conçues de telle sorte que le thermoplastique fluide sortant de la conduite de transport (7), parvenant à travers l'ouverture de conduite (8) dans la chambre (3) présente une direction d'écoulement orientée dans la direction de l'ouverture de sortie (6).

8. Outil selon la revendication 7,
**caractérisé en ce que** l'ouverture d'entrée (4) et l'ouverture de sortie (6) ménagées respectivement en vis-à-vis sur la chambre (3) sont orientées coaxialement à un premier axe (A1),
**en ce que** la conduite de transport (7) présente une portion de conduite (71) directement contiguë à l'ouverture de conduite (8), qui peut être coordonnée à un axe de conduite (L), qui définit avec le premier axe (A1) un angle α non égal à 90°, notamment de 10° ≤ α ≤ 80°.

9. Outil selon la revendication 7 ou 8,
**caractérisé en ce que** un dispositif de chauffage (9) est monté le long de la conduite de transport (7).

10. Outil selon une des revendications 7 à 9,
**caractérisé en ce que** le canal d'introduction (5) présente une ouverture de canal (10) en vis-à-vis de l'ouverture d'entrée (4) le long du canal d'introduction (5) et
**en ce que** le long du canal d'introduction (5) un dispositif de sectionnement (13) est monté pour sectionner le produit long (1) guidé à l'intérieur du canal d'introduction (5).

11. Outil selon la revendication 10,
**caractérisé en ce que** le long du canal d'introduction (5) un moyen de transport (14) est monté, qui peut être amené directement ou indirectement en liaison opérationnelle avec le produit long, afin de guider le produit long par sollicitation de force le long du canal d'introduction (5).

12. Outil selon la revendication 10,
**caractérisé en ce que** le moyen de transport est conçu comme une source d'air pressurisé, qui est reliée avec une conduite supplémentaire (11) débouchant dans le canal d'introduction (5) ou
**en ce que** le moyen de transport présente une paire de rouleaux entraînés, par l'intermédiaire desquels le produit long peut être guidé au moyen d'une friction.

13. Outil selon une des revendications 7 à 12,
**caractérisé en ce que** l'ouverture d'entrée (4) du canal d'introduction (5) débouchant dans la chambre (3) correspond à la zone de sortie (A) de la chambre à configuration conique (KK) selon la revendication 3 ou 4.

14. Outil selon une des revendications 2 à 5,
**caractérisé en ce que** au moins une zone de contact (K) est conçue comme une chambre (KK) à l'intérieur de l'unité de réticulation (2),
**en ce que** dans la chambre (KK) au moins une conduite de transport (7) faisant office de deuxième zone d'introduction (Z2) débouche via une ouverture de conduite (8), le long de laquelle le moyen (M) est prévu, à travers lequel le thermoplastique fluide peut être amené sous sollicitation de pression dans la chambre (KK),
**en ce que** l'unité de réticulation (2) présente un canal d'introduction (5) faisant office de première zone d'introduction (Z1), débouchant respectivement via une ouverture d'entrée (4) dans la chambre (KK) ainsi qu'une ouverture de sortie (6) servant de zone de sortie (A) disposée dans la chambre (KK),
**en ce que** l'ouverture de sortie (6) dispose d'un plus grand diamètre (d2) que le diamètre (d1) de l'ouverture d'entrée (4),
et
**en ce que** la chambre (KK) et au moins une ouverture de conduite (8) sont conçues et disposées de telle sorte que le thermoplastique fluide sortant de la conduite de transport (7), parvenant dans la chambre (KK) à travers l'ouverture de conduite (8) présente une direction d'écoulement orientée dans la direction de l'ouverture de sortie (6).

15. Outil selon la revendication 14,
**caractérisé en ce que** la conduite de transport (7) présente une portion en forme de cylindre creux le long de laquelle le moyen (M) sous la forme d'une paire de rouleaux ou de galets de transport est disposé avec un sens de rotation entraîné de manière respectivement opposée, qui peut être amenée en prise des deux côtés avec un tronçon de matière thermoplastique solide, qui peut être introduit via la conduite de transport (7) dans la direction de la chambre (KK),
**en ce que** la portion en forme de cylindre creux présente un plus grand diamètre intérieur que le diamètre de l'ouverture de conduite (8), dans lequel le diamètre intérieur de la portion cylindrique creuse (15) dans une zone de transition (16) aboutit en continu au diamètre de l'ouverture de conduite (8),
**en ce que** la portion en forme de cylindre ceux (15), ma zone de transition (16), l'ouverture de conduite (8), la chambre (KK) ainsi que l'ouverture de sortie (6) sont traversés par un axe commun,
**en ce que** au moins un canal d'introduction (5) pour le produit long présente un axe de canal (17), qui définit avec l'axe de symétrie (S) un angle α', pour lequel : 10° ≤ α' ≤ 80°.

16. Outil selon une des revendications 1 à 15,
**caractérisé en ce que** l'unité de réticulation est conçue comme une unité portable et est fabriquée en un seul tenant au moyen d'un procédé de fabrication générative.

17. Procédé de revêtement d'un produit long (1) se présentant sous la forme d'une marchandise au mètre, notamment sous la forme d'une fibre ou d'un faisceau de fibres, avec au moins une couche thermoplastique, dans lequel le produit long (1) sous la forme d'un tronçon avançant en continu peut être guidé à travers une zone de contact (K) pouvant être remplie avec un thermoplastique fluide et à travers une zone de sortie (A) hors de la zone de contact (K) et dans lequel le thermoplastique fluide est amené sous sollicitation de pression avec une direction d'écoulement prescrite dans la direction de la zone de sortie (A) dans la zone de contact (K),
**caractérisé en ce que** le produit long (1) est tiré à travers la zone de contact (K) par les forces de pression, qui agissent entre le produit long (1) et le thermoplastique fluide à l'intérieur de la zone de contact (K).

18. Procédé selon la revendication 17,
**caractérisé en ce que** le produit long est enfilé dans la zone de contact (K) sans intervention de force, c'est-à-dire sans forces de traction ou de pression agissant le long du produit long.
